# EUROPÄISCHE PATENTSCHRIFT

(11) **EP 3 199 397 B1**
(45) Veröffentlichungstag und Bekanntmachung des Hinweises auf die Patenterteilung: **05.05.2021**
(21) Anmeldenummer: 17000139.0
(22) Anmeldetag: 27.01.2017
(51) Int. Cl.: H02J 7/00, B60L 53/60, H02J 3/28

(54) **VERFAHREN ZUM BELADEN EINER TRAKTIONSBATTERIE VON ZUMINDEST TEILWEISE ELEKTRISCH ANGETRIEBENEN FAHRZEUGEN SOWIE LADESTATION**
METHOD FOR LOADING A TRACTION BATTERY OF AT LEAST PARTIALLY ELECTRICALLY DRIVEN VEHICLES AND LOADING STATION
PROCÉDÉ DE CHARGEMENT D'UNE BATTERIE DE TRACTION DE VÉHICULES EN PARTIE ÉLECTRIQUES ET POSTE DE CHARGE

(30) Priorität: 29.01.2016 DE 102016000920
(43) Veröffentlichungstag der Anmeldung: 02.08.2017
(73) Patentinhaber: Ilmberger, Florian, 80649 München (DE); Schäfer, Volkmar, 85276 Pfaffenhofen (DE)
(72) Erfinder: Ilmberger, Florian, 80649 München (DE); Schäfer, Volkmar, 85276 Pfaffenhofen (DE)
(74) Vertreter: Bierschneider, Walter

(56) Entgegenhaltungen:
- EP-A1- 2 875 985
- EP-A2- 2 790 290
- EP-A2- 2 902 250
- DE-A1-102011 011 347
- DE-A1-102013 200 949
- US-A1- 2011 276 194

## Beschreibung

Die Erfindung betrifft ein Verfahren zum Beladen einer zyklisch wiederaufladbaren Traktionsbatterie von zumindest teilweise elektrisch angetriebenen Fahrzeugen, insbesondere zum Beladen einer zyklisch wiederaufladbaren Traktionsbatterie von Elektro- und/oder Hybridautos, nach dem Oberbegriff des Anspruchs 1. Des Weiteren betrifft die Erfindung eine Ladestation zum Beladen einer zyklisch wiederaufladbaren Traktionsbatterie von zumindest teilweise elektrisch angetriebenen Fahrzeugen nach dem Oberbegriff des Anspruchs 20.

In den letzten Jahren haben sich die Rahmenbedingungen für den Einsatz von Elektrofahrzeugen wesentlich gewandelt und werden von den Autoherstellern derzeit vermehrt Elektrofahrzeuge im PKW-Segment angeboten, und zwar sowohl in Form von Hybridfahrzeugen als auch in Form von reinen Elektrofahrzeugen. Während bei den Hybridfahrzeugen die Fahrzeuge sowohl mittels eines Verbrennungsmotors als auch mittels eines allgemein auch als Elektromaschine bezeichneten Elektromotors angetrieben werden können, erfolgt bei reinen Elektrofahrzeugen der Antrieb ausschließlich mittels des Elektromotors. Für den elektromotorischen Antrieb werden je nach Fahrzeugtyp eine oder mehrere zyklisch wiederaufladbare Traktionsbatterien eingesetzt, bei denen es sich um eine an einem Stromnetz aufladbare Batterie handelt.

Die DE 10 2011 011 347 A1 offenbart ein Verfahren zum Aufladen einer Batterie eines Elektrofahrzeugs, bei dem zunächst ein Energiespeicher über eine aus einem Stromnetz gewonnene gleichgerichtete Spannung aufgeladen wird, bevor dann die Batterie anhand der in dem Energiespeicher gespeicherten elektrischen Energie aufgeladen wird. Der Energiespeicher weist mehrere Zellen auf, die in Reihe geschaltet sind und über eine Gleichspannung aus einem Stromnetz aufladbar sind. Durch die Pufferwirkung des Energiespeichers soll das Stromnetz deutlich gleichmäßiger belastet wird und insbesondere hohe Lastspitzen (und ggf. auch Lastsenken) weitgehend vermieden werden können.

Derartige, dem Fahrzeugantrieb dienende zyklische wiederaufladbare Traktionsbatterien zeichnen sich in Abgrenzung zu den ebenfalls im Fahrzeug eingesetzten und nicht dem Antrieb des Fahrzeugs dienenden Starterbatterien vor allem dadurch aus, dass diese ihre gespeicherte elektrische Energie in Form eines relativ niedrigen Stroms über längere Zeiträume abgeben, weswegen derartige Traktionsbatterien (die auch als Antriebsbatterien bezeichnet werden) regelmäßig dickere kleinere Oberflächen aufweisen, um einen kleineren Strom über einen längeren Zeitraum zu liefern. Im Gegensatz dazu sind Starterbatterien Batterien, die zum Anlassen eines Fahrzeuges konzipiert sind. Dies bedeutet konkret, dass Starterbatterien für eine kurze Zeit einen hohen Strom abgeben können müssen, weswegen diese regelmäßig eine große Plattenoberfläche mit möglichst vielen parallel geschalteten Elektroden aufweisen. Der Nachteil dieser Bauform der Starterbatterien ist jedoch, dass die Starterbatterien aus diesem Grund, im Gegensatz zu den Traktionsbatterien, Tiefenentladungen nicht so gut verkraften können.

Starterbatterien sind somit im Unterschied zu den Traktionsbatterien keine dem Antrieb eines Fahrzeugs dienenden Batterien, sondern Batterien, die aufgrund ihrer asymmetrischen Entlade- und Beladecharakteristik (das heißt zum einen der Bereitstellung eines hohen Entladestroms über einen kurzen Zeitraum sowie zum anderen Beladung mit niedrigem Ladestrom über einen langen Zeitraum) grundsätzlich völlig ungeeignet sind, um als Zyklus- und/oder Energiespeicher und damit als Antriebs- bzw. Traktionsbatterie eingesetzt zu werden.

Sobald die zyklisch wiederaufladbare Traktionsbatterie eines Fahrzeugs entladen ist, muss diese wieder aufgeladen werden. Während dies bei Hybridfahrzeugen weniger kritisch ist, weil dort das Aufladen der Traktionsbatterie im Rahmen des Fahrzeugbetriebs selbst erfolgen kann, zum Beispiel durch Nutzung der beim Bremsen frei werdenden Energie, gestaltet sich dies bei reinen Elektrofahrzeugen schwieriger, weil hier zwingend eine Aufladung der Traktionsbatterie mittels einer externen Energiequelle erfolgen muss. Dieses Aufladen mittels einer externen Energiequelle erfolgt regelmäßig über sogenannte Stromtankstellen, die eine Lademöglichkeit für die Traktionsbatterien bereitstellen. Neben der standardmäßigen Energieübertragung mittels eines Kabels, das von der Traktionsbatterie zu einem Anschlussstecker der Stromtankstelle, zum Beispiel zu einem Anschlussstecker einer Ladesäule der Stromtankstelle, geführt wird, um eine Direktbeladung der Traktionsbatterie über ein mit der Stromtankstelle bzw. der Ladesäule gekoppeltes Stromnetz zu ermöglichen, kann die elektrische Energie grundsätzlich aber auch induktiv übertragen werden.

Ein Problem einer derartigen Energieversorgung über Stromtankstellen ist jedoch, dass sich das Netz von derartig öffentlich zugänglichen Ladestellen noch immer im Aufbau befindet und daher insbesondere bei längeren Fahrten eine entsprechende Ladeplanung unumgänglich ist. Neben der Reichweitenproblematik stellt aber vor allem auch der Aufladevorgang selbst regelmäßig ein Problem dar, da eine Zuleitung vom Stromnetz zu einer Stromtankstelle bzw. zu einer Ladesäule einer Stromtankstelle stets auf eine hohe Beladeleistung bzw. eine hohe Beladestromstärke ausgelegt sein muss, um eine Direktbeladung der Traktionsbatterie eines Fahrzeugs in kurzer Zeit, insbesondere kleiner 1 Stunde, über bzw. aus dem Stromnetz sicherzustellen. Dies ist insbesondere an Orten mit einer niedrigeren Netzanschlussleistung ein erhebliches Problem und verursacht erhebliche zusätzliche Kosten, um die Netzinfrastruktur, das heißt einen Netzanschluss mit hoher Leistung, bereitzustellen. Zudem führt dies insbesondere an denjenigen Orten, an denen eine erhebliche Ladeaktivität zu verzeichnen ist, zu einer deutlichen zusätzlichen Mehrbelastung der Stromnetz-Infrastruktur.

Demgegenüber ist es Aufgabe der vorliegenden Erfindung, ein Verfahren zum Beladen einer zyklisch wiederaufladbaren Traktionsbatterie von zumindest teilweise elektrisch angetriebenen Fahrzeugen, insbesondere zum Beladen einer zyklisch wiederaufladbaren Traktionsbatterie von Elektro- und/oder Hybridautos, bereitzustellen, das universell einsetzbar ist und insbesondere auch an Orten mit einer niedrigen Netzanschlussleistung eine ausreichend schnelle Beladung von zyklisch wiederaufladbaren Traktionsbatterien gewährleistet, und zwar insbesondere in Verbindung mit einer allenfalls geringen Mehrbelastung der jeweils vorhandenen Stromnetz-Infrastruktur. Eine weitere Aufgabe der vorliegenden Erfindung ist es, eine geeignete Ladestation zum Beladen einer zyklisch wiederaufladbaren Traktionsbatterie von zumindest teilweise elektrisch angetriebenen Fahrzeugen zur Verfügung zu stellen.

Diese Aufgaben werden gelöst mit den Merkmalen der unabhängigen Patentansprüche. Vorteilhafte Ausgestaltungen sind Gegenstand der darauf rückbezogenen Unteransprüche.

Gemäß Anspruch 1 wird ein Verfahren zum Beladen einer zyklisch wiederaufladbaren Traktionsbatterie von zumindest teilweise mittels dieser Traktionsbatterie elektrisch angetriebenen Fahrzeugen vorgesehen. Erfindungsgemäß weist eine Ladestation wenigstens eine Batteriespeicheranlage und wenigstens eine, insbesondere Bestandteil der Batteriespeicheranlage bildende und/oder mit der Batteriespeicheranlage gekoppelte, Ladeeinrichtung auf, wobei die wenigstens eine Ladeeinrichtung wenigstens eine Energieübertragungseinrichtung aufweist, mittels der in einem Traktionsbatterie-Ladebetrieb elektrische Energie auf eine zu ladende Traktionsbatterie eines zumindest teilweise mittels der zu ladenden Traktionsbatterie elektrisch angetriebenen Fahrzeugs übertragen wird. Die Energieübertragungseinrichtung kann dabei auf unterschiedlichste Art und Weise ausgebildet sein. So zum Beispiel als Stromanschluss, insbesondere als Steckeranschluss, an den ein, an der Traktionsbatterie angeschlossenes Ladekabel zur Energieübertragung anschließbar ist. Alternativ dazu kann die Energieübertragungseinrichtung aber auch eine induktive Übertragung von elektrischer Energie ermöglichen.

Die wenigstens eine Batteriespeicheranlage, insbesondere eine Batteriespeicheranlage zur Bereitstellung einer hohen elektrischen Leistung, weist eine Vielzahl von zyklisch wiederaufladbaren Batterien auf, die in mehreren Batteriegruppen zusammengefasst sind, wobei als Batterien Starterbatterien, insbesondere Kraftfahrzeug-Starterbatterien und/oder Blei-Akkumulator-Starterbatterien, verwendet werden. Es versteht sich, dass die Begrifflichkeit Batteriegruppe hier so zu verstehen ist, dass jede einzelne der Batteriegruppen jeweils mehrere Batterien bzw. eine Mehrzahl von Batterien aufweist.

Weiter erfindungsgemäß speisen die Batteriegruppen unmittelbar zeitlich nacheinander während jeweils kurzer, vorzugsweise vom Ladezustand der jeweiligen Batteriegruppe abhängiger, Batteriegruppen-Entladezeitabschnitte von 10 bis 30 Sekunden, was in etwa dem Startvorgang einer Kraftfahrzeugbatterie entspricht, eine mit der Ladeeinrichtung oder eine mit einer Ladeeinrichtung energieübertragend verbundene Traktionsbatterie eines zumindest teilweise elektrisch angetriebenen Fahrzeugs mit einem hohen Batteriegruppen-Entladestrom von 300 bis 800 A, wobei die unmittelbar aufeinander folgenden kurzen Batteriegruppen-Entladezeitabschnitte den hohen Batteriegruppen-Entladestrom und damit einen hohen Ladestrom für die zu ladende Traktionsbatterie über einen, gegenüber einer Entladung einer einzelnen Batteriegruppe, längeren, vorzugsweise ununterbrochenen, Ladezeitraum ergeben.

Mit anderen Worten ist erfindungsgemäß vorgesehen, dass die zu mehreren Batteriegruppen zusammengefassten Batterien durch Starterbatterien, insbesondere durch Kraftfahrzeug-Starterbatterien und/oder durch Blei-Akkumulator-Starterbatterien, gebildet sind, wobei die Batteriegruppen eine Traktionsbatterie unmittelbar zeitlich nacheinander während jeweils - im Vergleich zu einem Ladezeitraum - kurzer, vorzugsweise vom Ladezustand der jeweiligen Batteriegruppe abhängiger, Entladezeitabschnitte mit einem gegenüber einem Beladestrom der Batteriegruppen hohen Ladestrom speisen und somit die unmittelbar aufeinanderfolgenden kurzen Entladezeitabschnitte einen von der Anzahl der Starterbatterien abhängigen Ladestrom bzw. hohen Ladestrom und damit eine in Abhängigkeit von der Anzahl der Starterbatterien definierte elektrische Leistungsabgabe bzw. hohe elektrische Leistungsabgabe an die Traktionsbatterie über einen gegenüber einer Entladezeit bzw. Entladung einer einzelnen Batteriegruppe längeren, vorzugsweise ununterbrochenen, Entladezeitraum ergeben.

Bei einer Starterbatterie im Sinne der vorliegenden Erfindungsidee handelt es sich, wie bereits zuvor dargelegt, gerade nicht um Traktionsbatterien, sondern um solche Batterien, die aufgrund ihrer asymmetrischen Entlade- und Beladecharakteristik (zum einen Bereitstellung eines hohen Entladestroms über einen kurzen Zeitraum sowie zum anderen Beladung mit niedrigem Ladestrom über einen langen Zeitraum) an sich ungeeignet sind, um als Zyklus- und/oder Energiespeicher und damit als Traktionsbatterien eingesetzt zu werden. Wie zuvor dargelegt, ist es ein wesentliches Kriterium der Traktionsbatterien, dass diese ihre gespeicherte Energie über längere Zeiträume abgeben, weswegen sie auch für den Antrieb von Hybrid- und/oder Elektrofahrzeugen eingesetzt werden. Darüber hinaus werden derartige, den Traktionsbatterien vergleichbare Batterien auch als Industriebatterien bezeichnet und zum Beispiel in Kühl- oder Heizungsanlagen eingesetzt.

Wie zuvor weiter dargelegt, ist die Hauptanforderung an eine Starterbatterie die extrem hohe Stromabgabe über einen kurzen Zeitraum, zum Beispiel von 10 Sekunden, (Hochstromfähigkeit). Diese Situation tritt zum Beispiel typischerweise beim Startvorgang eines Verbrennungsmotors auf. Bei tiefen Temperaturen gewinnt die Hochstromfähigkeit der Batterie zusätzlich an Bedeutung. Aus diesem Grund ist die Startkraft die wesentliche Kenngröße einer Starterbatterie - angegeben als Kaltstartstrom.

Der Kaltstartstrom kann zum Beispiel analog zur Norm DIN EN 50342-1 (VDE 0510-1001) als diejenige Stromstärke in Ampere definiert werden, mit der eine vollgeladene und auf -18°Celsius abgekühlte Batterie belastet werden kann, ohne dass die Klemmspannung während der ersten 10 Sekunden unter 7,5 Volt absinkt. Dementsprechend sollte der Entladestrom der erfindungsgemäß verwendeten Starterbatterien bevorzugt im Bereich zwischen 20% bis 100% des Kaltstartstroms liegen.

Durch die erfindungsgemäß aufeinanderfolgende Aktivierung einzelner mit Starterbatterien bestückter Batteriegruppen, von denen jede Batteriegruppe einen sehr hohen Ladestrom liefern kann, besteht somit die Möglichkeit, mit an sich für die Beladung von Traktionsbatterien ungeeigneten Starterbatterien über einen längeren Zeitraum einen hohen Ladestrom bereitzustellen, der eine entsprechend schnelle und hohe Leistungsabgabe über einen längeren Zeitraum an eine Traktionsbatterie ermöglicht.

Mit einer derartigen erfindungsgemäßen Lösung gelingt es somit, Schnell-Ladestationen für zumindest teilweise mittels einer zyklisch wiederaufladbaren Traktionsbatterie elektrisch an- bzw. betriebene Fahrzeuge auch an Orten mit niedriger Netzanschlussleistung mit geringen Kosten bereitzustellen, da Kosten für eine Netzinfrastruktur, wie beispielsweise einen Netzanschluss mit hoher Leistung, entfallen und eine vorhandene Infrastruktur genutzt werden kann bzw. nur mäßig ausgebaut werden muss. Mit der erfindungsgemäßen Lösung gelingt zudem ein schneller und einfacher Aufbau einer Vielzahl von Schnell-Ladestationen, wobei eben gerade keine zusätzliche oder eben nur eine mäßige Mehrbelastung der vorhandenen Stromnetz-Infrastruktur gegeben ist. Insbesondere können Rastplätze, Autobahnparkplätze, Gewerbegebiete, Parkplätze, etc. schnell und einfach mit einer erfindungsgemäßen Lösung nachgerüstet werden. Unter einer Schnell-Ladestation werden dabei vorzugsweise solche Ladestationen verstanden, mit denen eine Traktionsbatterie innerhalb von 20 bis 80 Minuten, bevorzugt innerhalb von 30 bis 50 Minuten, auf ungefähr 80% der Batteriekapazität aufgeladen wird (ausgehend von 0 bis 10 % Batteriekapazität).

Die Zusammenfassung der Starterbatterien in Batteriegruppen kann so erfolgen, dass auch Batterien mit unterschiedlichen Leistungsparametern verwendet werden können. Hierzu werden dann aber bevorzugt gleichartige Batterien in jeweils einer Batteriegruppe zusammengefasst. Batterien mit einer anderen Leistungscharakteristik werden in einem solchen Fall dann bevorzugt in einer entsprechend anderen Batteriegruppe zusammengefasst. Somit besteht sogar die Möglichkeit, dass auch ältere Batterien, die für den Einsatz in Kraftfahrzeugen nicht mehr geeignet sind, zu einer Batteriegruppe zusammengefasst werden können, die dann beispielsweise einen hohen Ladestrom über einen etwas kürzeren Batteriegruppen-Entladezeitraum bereitstellt als eine Batteriegruppe mit beispielsweise neuen Batterien.

Durch eine Zusammenschaltung mehrerer Batteriegruppen in einem Parallelverbund können während eines Traktionsbatterie-Ladebetriebs sehr hohe Ladeströme realisiert werden. Um geeignete Batteriegruppen bilden zu können wird weiterhin vorgeschlagen, zunächst eine Klassifizierung der vorhandenen Batterien mittels einer Messung ihrer elektrischen Eigenschaften vorzunehmen, so dass dann jeweils Batterien mit gleichartiger Klassifizierung in einer bzw. in mehreren gleichartigen Batteriegruppen zusammengefasst werden. Auf diese Weise können sehr unterschiedliche Batterietypen und auch Batterien mit sehr unterschiedlichem Leistungsstandard in der Batteriespeicheranlage verwendet werden. Ein besonders großer Vorteil besteht darin, auch Altbatterien mit stark reduzierter Speicherkapazität zur Stromversorgung in der Batteriespeicheranlage verwenden zu können.

Altbatterien sind solche Starterbatterien, die zum Zwecke der Entsorgung, zum Beispiel von einem Fachhändler, einer Autowerkstatt, etc. an ein Entsorgungsunternehmen abgegeben werden müssen, da sie den benötigten bzw. definiert vorgegebenen Startstrom nicht mehr abgeben können bzw. ihre Kapazität unter einen definiert vorgegebenen Prozentsatz, bezogen auf ihre Nennkapazität, gesunken ist. Dies kann zum Beispiel der Fall sein, wenn die Kapazität der Starterbatterie unter 80% ihrer Nennkapazität gesunken ist.

Zur Klassifizierung der Batterien wird bevorzugt die Speicherkapazität herangezogen, so dass derart gleich klassifizierte Batterien eine Batteriegruppe bilden, die dann eine entsprechend vorgegebene Speicherkapazität und damit eine entsprechend vorgegebene maximale Entladedauer besitzt. Alternativ oder zusätzlich könnten aber auch weitere Parameter herangezogen werden, zum Beispiel die Bauart und/oder die Dimensionierung und/oder die Polanordnung und/oder die Polgröße, um nur einige weitere Beispiele zu nennen.

Der Betrieb der Batteriespeicheranlage erfolgt vorzugsweise so, dass fortlaufend die Funktionsfähigkeit der verwendeten Batterien überprüft wird. Damit können defekte Batterien erkannt und durch Anschaltung funktionsfähiger Reservebatterien ersetzt werden. Damit ausreichend Reservebatterien in einer Batteriegruppe vorhanden sind, können je nach Klassifizierung der Batteriegruppe mehr oder weniger Reservebatterien vorgesehen sein. Eine aus Altbatterien bestehende Batteriegruppe wird demzufolge mit einer höheren Anzahl von Reservebatterien bestückt als eine aus neuwertigen Batterien bestehende Batteriegruppe. Eine Reservebatterie ist somit vorzugsweise eine solche Batterie, die in eine bestimmte Batteriegruppe einklassifiziert ist bzw. wird.

Der Batteriegruppen-Ladevorgang kann über eine Stromquelle, vorzugsweise ein Stromnetz, zeitlich vollkommen unabhängig vom Batteriegruppen-Entladevorgang und damit vom Traktionsbatterie-Ladevorgang getätigt werden. Zum Beispiel kann der Batteriegruppen-Ladevorgang über eine Stromquelle, vorzugsweise ein Stromnetz, zeitlich versetzt zum Batteriegruppen-Entladevorgang und damit zum Traktionsbatterie-Ladevorgang getätigt werden. Alternativ dazu können sich der Batteriegruppen-Ladevorgang und der Batteriegruppen-Entladevorgang aber auch zeitlich überlappen.

Das Verfahren zum Beladen einer zyklisch wiederaufladbaren Traktionsbatterie sieht weiterhin vor, dass während eines Batteriegruppen-Ladevorgangs mehrere Batteriegruppen dergestalt parallel geschaltet werden, dass der Ladevorgang an den einzelnen Batterien bzw. Batteriegruppen mit einem gegenüber dem hohen Entladestrom niedrigeren Ladestrom und damit über einen gegenüber dem Entladezeitraum längeren, insbesondere deutlich längeren, Zeitraum durchgeführt werden kann. Bevorzugt werden dabei die Batterien der Batteriegruppen mit einem gegenüber den hohen Entladeströmen niedrigeren, insbesondere um den Faktor 2 bis 10 niedrigeren, Ladestrom geladen. Mit anderen Worten werden während des Batteriegruppen-Ladezeitraums bzw. Batteriegruppen-Ladevorgangs mehrere Batteriegruppen parallel geschaltet, um den Ladestrom auf die Batteriegruppen aufzuteilen und die Batterien der Batteriegruppen mit einem gegenüber den hohen Entladeströmen niedrigeren Ladestrom zu laden. Das heißt, dass der Batteriegruppen-Ladevorgang mit einer für eine geringe Netzbelastung geringen Stromstärke erfolgt, während der Batteriegruppen-Entladevorgang und damit der Traktionsbatterie-Ladevorgang mit einer demgegenüber wesentlich höheren Stromstärke erfolgt. Dadurch wird eine schnelle, gepufferte Beladung einer Fahrzeug-Traktionsbatterie mit einer erfindungsgemäßen Ladestation auch an Orten mit einer niedrigen Netzanschlussleistung möglich, weil eben gerade keine Direktbeladung des Fahrzeugs aus dem Stromnetz erfolgt.

Gemäß einer weiteren besonders bevorzugten Verfahrensführung kann die wenigstens eine Batteriespeicheranlage und damit die Ladestation bilanziell, vorzugsweise gesteuert mit einer Steuereinrichtung, mit unterschiedlichen Stromsorten beladen sein und/oder werden, insbesondere dergestalt, dass eine bestimmte Strommenge des in der Ladestation eingespeicherten Stroms einer bestimmten Stromsorte entspricht und/oder zugeordnet wird. Bevorzugt ist hierbei vorgesehen, dass über die Ladestation, vorzugsweise gesteuert mit einer Steuereinrichtung, eine bestimmte Stromsorte nur so lange abzapfbar ist, wie die angeforderte Strommenge dieser Stromsorte kleiner ist als die noch in der Batteriespeicheranlage für diese Stromsorte eingespeicherte Strommenge. Hierzu kann beispielsweise nach jedem Einspeichern und Abzapfen einer bestimmten Menge einer Stromsorte die jeweils aktuell vorhandene Strommenge dieser Stromsorte, vorzugsweise mittels einer Bestandteil einer Steuereinrichtung bildenden Auswerteeinrichtung, bestimmt und als neuer Strommengen-Istwert für diese bestimmte Stromsorte festgesetzt werden. Ebenso ist bevorzugt festgelegt, dass maximal diejenige Strommenge abgebbar ist, die bilanziell für diese Stromsorte in der zugeordneten wenigstens einen Batteriespeicheranlage eingespeichert ist. Dies soll anhand eines Beispiels verdeutlicht werden: Beispielsweise kann eine bestimmte Menge X von grünem Strom in einer Batteriespeicheranlage einer Ladestation eingespeichert sein, in der insgesamt aber eine wesentlich größere Strommenge als die Grünstrommenge X eingespeichert sein kann, beispielsweise die Strommenge 10X. Über die Ladestation kann dann bei einer Grünstromanforderung durch einen oder mehrere Nutzer nur genau die Menge X an Grünstrom abgegeben werden, die eingespeichert war, also die Menge X. Reicht die vorhandene Restmenge an Grünstrom gegebenenfalls für einen Ladevorgang nicht mehr aus, kann der Nutzer eine andere Stromsorte (gegebenenfalls zusätzlich) wählen oder eine andere Ladestation anfahren, die eine ausreichende Menge an Grünstrom hat. Es versteht sich, dass das eben Gesagte analog für alle anderen Stromsorten gilt.

Gemäß einer weiteren besonders bevorzugten Ausführungsform ist es in Verbindung mit einem, eine Mehrzahl von Ladestationen aufweisenden Ladestation-Netzwerk vorteilhaft, wenn die Möglichkeit einer, vorzugsweise bilanziellen, Verschiebung einer bestimmten Strommenge einer bestimmten Stromsorte zwischen unterschiedlichen Ladestationen, vorzugsweise gesteuert mit einer Steuereinrichtung, besteht. Dies kann grundsätzlich auf verschiedenste Art und Weise erfolgen. Besonders vorteilhaft ist jedoch beispielhaft eine bilanzielle Verschiebung, bei der eine bestimmte Strommenge einer ersten Stromsorte einer ersten Ladestation zu einer anderen (hier der Übersichtlichkeit wegen als "zweite" bezeichneten) Ladestation des Ladestation-Netzwerkes verschoben und dort die Strommenge der ersten Stromsorte entsprechend erhöht wird, wobei im Gegenzug von der zweiten Ladestation eine der verschobenen Strommenge entsprechende Strommenge einer nicht der ersten Stromsorte entsprechenden anderen, zweiten Stromsorte der ersten Ladestation zugeführt wird und somit in der ersten Ladestation die Strommenge dieser zweiten Stromsorte entsprechend erhöht wird. Dadurch ist insgesamt gesehen in beiden Ladestationen nach wie vor eine gleiche Strommenge wie vor der Verschiebung vorhanden, jedoch die Strommenge der unterschiedlichen Stromsorten in den von der Verschiebung betroffenen Ladestationen variiert bzw. verändert worden.

Eine derartige generelle Verschiebemöglichkeit hat zum Beispiel den Vorteil, dass zum Beispiel für den Fall, dass in einer Ladestation keine ausreichende Menge einer bestimmten Stromsorte mehr vorhanden sein sollte, was zum Beispiel schwellwertbasiert kontrolliert werden kann, die Strommenge dieser Stromsorte durch einfaches Verschieben, bevorzugt bilanzielles Verschieben wie zuvor beschrieben, einer bestimmten Strommenge einer bestimmten Stromsorte von einer anderen Ladestation innerhalb eines Ladestation-Netzwerkes erhöht werden kann. Hierbei wird dann die benötigte Strommenge einer bestimmten Stromsorte bevorzugt von einer solchen Ladestation abgezapft, in der noch eine ausreichende Menge dieser Stromsorte vorhanden ist.

Allgemein gesehen hat eine Beladung mit unterschiedlichen Stromsorten den Vorteil, dass unterschiedliche Stromsorten (zum Beispiel grüner Strom, grauer Strom, brauner Strom, Strom aus Windkraft, Strom aus Solaranlagen, Atomstrom, etc.) angeboten werden können, die der Nutzer entsprechend seinen individuellen Vorstellungen sowie gegebenenfalls auch im Hinblick auf ein bestimmtes Preisgefüge auswählen kann.

Grundsätzlich kann für das Stromabzapfen wenigstens eine Energieübertragungseinrichtung und/oder wenigstens eine Anzeigeeinrichtung ausreichend sein, um an einer Ladeeinrichtung bzw. an einer Ladesäule das Stromabzapfen zu ermöglichen bzw. die jeweils gewünschten bzw. benötigten Informationen, wie zum Beispiel Stromsorte, Strompreis, Strommenge etc., anzuzeigen. Gemäß einer lediglich beispielhaften konkreten ersten Ausführungsform kann jedoch zum Beispiel vorgesehen sein, dass eine Ladeeinrichtung, vorzugsweise eine Ladesäule als Ladeeinrichtung, in der Art einer Zapfsäule herkömmlicher Kraftstoff-Tankstellen mehrere Energieübertragungseinrichtungen und/oder Anzeigeeinrichtungen aufweist, die unterschiedlichen Stromsorten zugeordnet sind. Mit einem derartigen Aufbau wird erreicht, dass der Benutzer einen Zapfvorgang "erleben" kann, der analog zu demjenigen einer Kraftstoff-Tankstelle ist, weil er zum Beispiel die Energieübertragungseinrichtung für Grünstrom auswählt oder weil er über die Anzeigeeinrichtung bzw. ein dieser zugeordnetes Bedienfeld, wie vorstehend beschrieben stets bilanziell kontrolliert, Grünstrom "tanken" kann.

Alternativ dazu kann die Ladestation aber auch mehrere, unterschiedlichen Stromsorten zugeordnete Ladeeinrichtungen aufweisen, das heißt also pro Stromsorte wenigstens eine eigene Ladeeinrichtung (insbesondere pro Stromsorte eine eigene Ladesäule) vorgesehen sein, die dann zum Beispiel entsprechend gekennzeichnet sein kann, zum Beispiel farblich gekennzeichnet sein kann, um nur ein Beispiel zu nennen.

Die Ladestation, vorzugsweise wenigstens eine Ladeeinrichtung der Ladestation, kann des Weiteren ganz allgemein eine Informationseinrichtung aufweisen, mittels der eine bestimmte Information ausgebbar und/oder anzeigbar ist, vorzugsweise eine Information über eine ladeeinrichtungsseitig verfügbare Strommenge und/oder über eine ladeeinrichtungsseitig verfügbare Stromsorte, insbesondere eine Information über eine ladeeinrichtungsseitig verfügbare Strommenge einer bestimmten Stromsorte, und/oder eine Information über den Strompreis, vorzugsweise über den Preis einer bestimmten Stromsorte, ausgebbar und/oder anzeigbar ist. Die Informationseinrichtung kann hier beispielsweise eine, vorzugsweise ladeeinrichtungsseitig angeordnete, Anzeigeeinrichtung, zum Beispiel ein Display, aufweisen, mittels der die jeweilige Information anzeigbar, insbesondere visuell anzeigbar ist. Die Informationseinrichtung kann des Weiteren auch ein Bedienfeld aufweisen, über das dann vom Benutzer Eingaben gemacht werden können.

Alternativ oder zusätzlich kann die Informationseinrichtung auch eine Kommunikationseinrichtung sein bzw. aufweisen, mittels der über drahtlose Kommunikation, vorzugsweise mit einem mobilen Endgerät, wie beispielsweise einem Smartphone, und/oder in Verbindung mit einer auf einem mobilen Endgerät, wie beispielsweise einem Smartphone, installierten Applikationssoftware, eine Fernabfrage der jeweiligen Information durchgeführt werden kann. Beispielsweise kann in Verbindung mit der Fernabfrage, insbesondere über eine Applikationssoftware eines mobilen Endgerätes, an einer Ladeeinrichtung eine Strommengenreservierung, vorzugsweise für eine bestimmte Zeitdauer und/oder für eine bestimmte Strommenge, durchgeführt werden.

Des Weiteren können eine Mehrzahl von Ladestationen Bestandteil eines Ladestation-Netzwerkes sein und mittels einer (oder der vorstehend beschriebenen) Fernabfrage die jeweils abrufbare(n) Information(en) der einzelnen Ladestationen des Ladestation-Netzwerks abrufbar sein. Damit kann ein besonders vorteilhaftes Management eines Ladestation-Netzwerkes zur Verfügung gestellt werden und letztendlich sichergestellt werden, dass der Nutzer eine Fahrt in optimaler Weise planen kann.

Die Beladung der wenigstens einen Batteriespeicheranlage einer Ladestation, insbesondere bezogen auf unterschiedliche Stromsorten aus dem Stromnetz und/oder bezogen auf einen beliebigen Strommix aus dem Stromnetz, kann zudem bevorzugt in Abhängigkeit von definierten Parametern, vorzugsweise Strombeladungsparametern und/oder Stromeinkaufsparametern, zu vorgegebenen und/oder ermittelten Zeitpunkten erfolgen. Die Zeitpunkte können dabei insbesondere mittels einer zentralen, die Beladung steuernden Beladungs-Steuereinrichtung vorgegeben und/oder ermittelt werden.

Die Beladung der Ladestationen (bzw. deren wenigstens eine Batteriespeicheranlage) eines mehrere Ladestationen aufweisenden Ladestation-Netzwerkes wird, bevorzugt mittels einer zentralen Beladungs-Steuereinrichtung, in ganz allgemeiner Weise bevorzugt so erfolgen, dass der Strom in einer definierten Weise, zum Beispiel im Wesentlichen gleichmäßig, auf die Ladestationen verteilt wird und/oder dass der Strom so auf die Ladestationen verteilt wird, dass diese jeweils einen bestimmten, zum Beispiel einen in etwa gleichen, Beladungs- bzw. Füllstand aufweisen. Damit wird auf einfache Weise sichergestellt, dass innerhalb eines Netzwerkes unterschiedlicher Ladestationen eine im Wesentlichen gleichmäßige homogene Verteilung des Stroms erfolgt.

Die Beladung der Ladestationen (bzw. deren wenigstens eine Batteriespeicheranlage) eines mehrere Ladestationen aufweisenden Ladestation-Netzwerks kann, beispielsweise gesteuert mit einer Steuereinrichtung, gemäß einer besonders bevorzugten Ausführungsform aber alternativ oder zusätzlich auch so vorgenommen werden, dass der Strom, in Abhängigkeit von einer angefragten zukünftigen Abgabemenge und einer diesbezüglich von der Beladungs-Steuereinrichtung festgestellten drohenden Unterversorgung einer bestimmten Ladestation, vorrangig dieser Ladestation zugeführt wird. Damit kann zum Beispiel eine Unterversorgung einer häufig frequentierten Ladestation zuverlässig vermieden werden.

Wie bereits zuvor ausgeführt, ist es besonders vorteilhaft, dass als Starterbatterien Altbatterien verwendet werden.

Mit der erfindungsgemäßen Ladestation zum Beladen einer zyklisch wiederaufladbaren Traktionsbatterie von zumindest teilweise elektrisch angetriebenen Fahrzeugen, insbesondere zur Durchführung eines Verfahrens nach einem der vorhergehenden Ansprüche, lassen sich die gleichen Vorteile erzielen, wie sie bereits zuvor in Verbindung mit der Verfahrensführung dargestellt worden sind. Konkret weist diese Ladestation wenigstens eine Batteriespeicheranlage auf, die, insbesondere zur Breitstellung einer hohen elektrischen Leistung, eine Vielzahl von zyklisch wiederaufladbaren Batterien aufweist, die in mehreren Batteriegruppen zusammengefasst sind, wobei die Batterien durch Starterbatterien, insbesondere Kraftfahrzeug-Starterbatterien und/oder Blei-Akkumulator-Starterbatterien, gebildet sind. Die Batteriespeicheranlage weist zudem wenigstens eine Ladeeinrichtung auf und/oder ist mit wenigstens einer Ladeeinrichtung gekoppelt, die wenigstens eine Energieübertragungseinrichtung aufweist, mittels der in einem Traktionsbatterie-Ladebetrieb elektrische Energie auf eine zu ladende Traktionsbatterie eines zumindest teilweise elektrisch angetriebenen Fahrzeugs übertragbar ist. Ferner ist eine Schalteinrichtung zur Durchführung einer Verschaltung von einzelnen oder mehreren Batteriegruppen zur Energieübertragung an eine zu ladende Traktionsbatterie vorgesehen, und zwar dergestalt, dass die Batteriegruppen unmittelbar zeitlich nacheinander während jeweils kurzer Batteriegruppen-Entladezeitabschnitte eine mit der Ladeeinrichtung energieübertragend verbundene Traktionsbatterie eines zumindest teilweise mittels dieser zu ladenden Traktionsbatterie elektrisch angetriebenen Fahrzeugs mit einem hohen Batteriegruppen-Entladestrom speisen, wobei unmittelbar aufeinanderfolgende kurze Batteriegruppen-Entladezeitabschnitte den hohen Batteriegruppen-Entladestrom und damit einen hohen Ladestrom für die zu ladende Traktionsbatterie über einen, insbesondere gegenüber einer Entladungszeit bzw. Entladung einer einzelnen Batteriegruppe, längeren, vorzugsweise ununterbrochenen, Ladezeitraum ergeben.

Die Batteriespeicheranlage selbst kann beispielsweise geschützt in einem Container angeordnet und aufgenommen sein, während die wenigstens eine Ladeeinrichtung, vorzugsweise in Form einer Ladesäule, an diesem und/oder außerhalb des Containers frei zugänglich angeordnet und mit der Batteriespeicheranlage stromleitend verbunden ist.

Falls das Fahrzeug, dessen Traktionsbatterie zu laden ist, einen Gleichrichter aufweist, wird der von der Ladestation bzw. von der Batteriespeicheranlage an die Traktionsbatterie übermittelte Gleichstrom bevorzugt zuerst ladestationsseitig wechselgerichtet, um sicherzustellen, dass der fahrzeugseitige Gleichrichter einen Wechselstrom gleichrichten kann und damit der Traktionsbatterie der benötigte Gleichstrom zugeführt werden kann. Falls das, die zu ladenden Traktionsbatterie aufweisende Fahrzeug allerdings keinen Gleichrichter aufweist, kann der von der Ladestation bzw. von der Batteriespeicheranlage an die Traktionsbatterie übermittelte Gleichstrom der Traktionsbatterie ungerichtet zugeführt werden.

Vorteilhafte Ausgestaltungen der Ladestation sind wiederum in den Unteransprüchen zur Ladestation beansprucht, wobei bezüglich der sich dadurch ergebenden Vorteile ebenfalls wiederum auf die zuvor gemachten Ausführungen verwiesen wird.

Die Erfindung wird nachfolgend anhand einer Zeichnung näher erläutert:

Es zeigen:
- Fig. 1: ein Blockschaltbild einer beispielhaften Ausführungsform einer erfindungsgemäßen Ladestation mit einer Ladesäule und einer Batteriespeicheranlage mit einer Vielzahl von Batteriegruppen,
- Fig. 2: eine schematische Darstellung der zeitlichen Entnahme eines Batteriegruppen-Entladestroms sowie die Einspeisung eines Batteriegruppen-Ladestroms bei einer vorgegebenen Anzahl von Batteriegruppen, und
- Fig. 3: eine schematische Darstellung einer zur Fig. 2 alternativen zeitlichen Entnahme eines Batteriegruppen-Entladestroms mitsamt überlappender Einspeisung eines Batteriegruppen-Ladestroms.

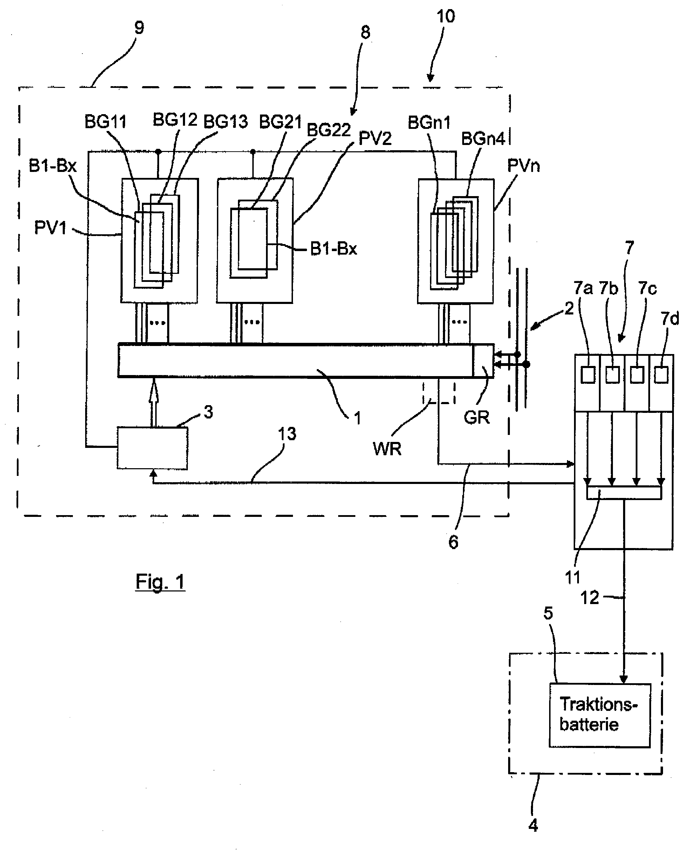

Die in Fig. 1 dargestellte Ladestation 10 weist eine Batteriespeicheranlage 8 auf, die zum Beispiel in einem hier lediglich strichliert gezeichneten Container 9 angeordnet und aufgenommen ist. Diese Batteriespeicheranlage 8 weist eine Vielzahl von Batteriegruppen BG11 bis BGn4 auf, die jeweils aus einer Vielzahl hier nicht näher dargestellter Starterbatterien B1 bis Bx bestehen. Die Batteriegruppen BG11 bis BG13 können einen Parallelverbund PV1 bilden, wobei dann beispielsweise die Batteriegruppen BG11 bis BG13 parallel geschaltet sein können. In entsprechender Weise können die weiteren Batteriegruppen zu Parallelverbünden PV2 bis PVn Parallelschaltungen mit jeweils zwei oder mehreren Batteriegruppen bilden.

Die Batteriegruppen BG11 bis BGn4 können mittels einer Schalteinrichtung 1, die auch als Koppelnetzwerk bezeichnet werden kann, an ein Versorgungsnetz 2, welches ein Wechselspannungsnetz sein kann, angeschaltet werden. Damit die vom Versorgungsnetz 2 bereitgestellte elektrische Energie den einzelnen Starterbatterien der Batteriegruppen zur Verfügung gestellt werden kann, muss eine Umwandlung der Wechselspannung in eine Gleichspannung mittels Gleichrichter erfolgen. Hierzu kann in der Schalteinrichtung 1 ein oder mehrere Gleichrichter GR vorgesehen sein, das heißt die erforderlichen Gleichrichter können den einzelnen Batterien oder den einzelnen Batteriegruppen BG11 bis BGn4 zugeordnet sein, zum Beispiel können zugeordnet zu den einzelnen Batteriegruppen BG11 bis BGn4 eine Vielzahl von Gleichrichtern in den Batteriegruppen eingesetzt sein.

Mittels einer Steuereinrichtung 3 kann somit zu bestimmten vorgegebenen Zeiten, zum Beispiel zu Zeiten niedriger Preise an der Strombörse bzw. zu Zeiten niedriger Preise für eine bestimmte Stromsorte, eine Aufladung der Batterien B1 bis Bx der verschiedenen Batteriegruppen BG11 bis BGn4 von der Steuereinrichtung 3 veranlasst werden. Hierzu wird die Schalteinrichtung 1 entsprechend von der Steuereinrichtung 3 betätigt, sodass ein Ladestrom in die aufzuladenden Starterbatterien eingespeist werden kann.

Die in einem Parallelverbund PV1 bis PVn zusammenfassten Batteriegruppen können so ausgewählt sein, dass die Batteriegruppen eines Parallelverbundes einer zumindest annähernd gleichen Leistungsklasse angehören. So können beispielsweise die Batteriegruppen BG11 bis BG13 gleichartige neuwertige Starterbatterien umfassen, während die Batteriegruppen BG21 und BG22 zum Beispiel aus alten Starterbatterien bzw. Altbatterien aufgebaut sein können, die nur noch eine Speicherkapazität von kleiner oder gleich 80 % aufweisen. Die unterschiedliche Leistungsklasse verschiedener Batteriegruppen ist in der Fig. 1 durch eine unterschiedliche Größe der dargestellten Rechtecke, die jeweils eine Batteriegruppen symbolisieren, veranschaulicht, wie zum Beispiel bei den Batteriegruppen BG11 und BG21.

Weiterer Bestandteil der Ladestation 10 ist eine hier lediglich schematisch dargestellte Ladesäule 7 als Ladeeinrichtung, die außerhalb des die Batteriespeicheranlage 8 aufnehmenden Containers 9 und/oder an diesem angeordnet ist. Diese Ladesäule 7 ist mit der Batteriespeicheranalage 8, insbesondere mit der Schalteinrichtung 1 elektrisch verbunden (Pfeil 6) und weist des Weiteren ein Anschlusselement 11, zum Beispiel einen Anschlussstecker, als Energieübertragungseinrichtung auf, an das zum Beispiel ein Ladekabel 12 einer zu ladenden Traktionsbatterie 5 eines zum Beispiel Elektroautos 4 angeschlossen werden kann, sodass ein Ladestrom über die Ladesäule 7 aus der Batteriespeicheranlage 8 abgezapft und der Traktionsbatterie 5 zugeführt wird. Falls das Fahrzeug, dessen Traktionsbatterie zu laden ist, einen Gleichrichter aufweist, kann der von der Ladestation 10 bzw. von der Batteriespeicheranlage 8 an die Traktionsbatterie übermittelte Gleichstrom zuerst wechselgerichtet werden, was in der Fig. 1 lediglich schematisch und symbolisch mit dem optionalen, strichliert eingezeichneten Wechselrichter WR dargestellt ist. Ansonsten liefert die Ladestation 10 bzw. Batteriespeicheranlage 8 einen Gleichstrom, das heißt dass der an die Traktionsbatterie übermittelte Strom dann nicht über den oder die Wechselrichter geführt wird. Auch hier kann wieder analog zum Vorsehen der Gleichrichter vorgesehen sein, dass die Wechselrichter dann den einzelnen Batterien oder den einzelnen Batteriegruppen zugeordnet sind.

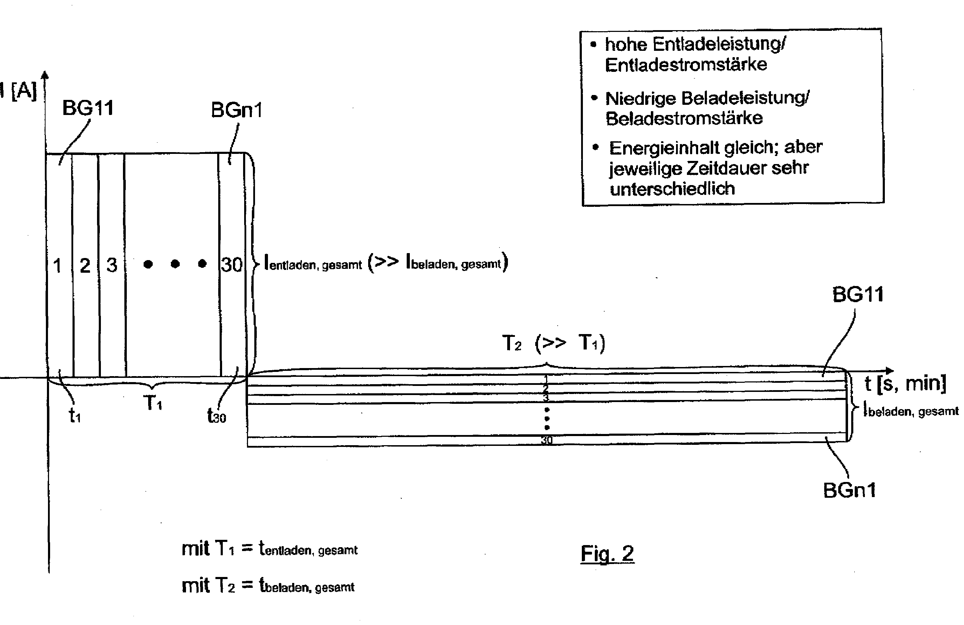

In Fig. 2 ist der Stromverlauf zum einen während eines Batteriegruppen-Entladezeitraums und damit während eines Traktionsbatterie-Ladezeitraums T1 sowie zum anderen während eines Batteriegruppen-Ladezeitraums T2 dargestellt. Während des Ladezeitraums T1 werden lediglich beispielhaft mehrere, zum Beispiel 30, Batteriegruppen B11 bis BGn1 für jeweils kurze Zeitabschnitte t1 bis t30 zeitlich nacheinander zum Laden der Traktionsbatterie 5 angeschaltet und dabei entladen. Dies hat zur Folge, dass die Batteriegruppen aufgrund der unmittelbar zeitlich nacheinander stattfindenden Entladungen die Traktionsbatterie 5 mit einem hohen Ladestrom speisen, das heißt, dass die unmittelbar aufeinanderfolgenden kurzen Entladezeitabschnitte der einzelnen Batteriegruppen einen von der Anzahl der Starterbatterien abhängigen hohen Ladestrom und damit eine hohe elektrische Leistungsabgabe an die Traktionsbatterie 5 über einen gegenüber einer Entladezeit bzw. Entladung einer einzelnen Batteriegruppe längeren, ununterbrochenen Entladezeitraum ergeben.

Dagegen sind während des Batteriegruppen-Ladezeitraums T2 die mehreren, zum Beispiel 30, Batteriegruppen BG11 bis BGn1 parallel geschaltet, wodurch sich der gesamte Ladestrom auf die mehreren Batteriegruppen aufteilt. Wie aus der Fig. 2 deutlich ersichtlich ist, ist der Batteriegruppen-Ladezeitraum T2 und damit die Beladezeit der Batteriegruppen deutlich länger bzw. größer als der Traktionsbatterie-Ladezeitraum T1 bzw. die Entladezeit der Batteriegruppen. Zudem ist die Entladestromstärke I_{entladen,gesamt} der Batteriegruppen deutlich größer als deren Beladestromstärke I_{beladen,gesamt}. Aus der Fig. 2 ist daher deutlich ersichtlich, dass bei gleichen Energieinhalt die jeweiligen Zeitdauern T1 und T2 sehr unterschiedlich sind.

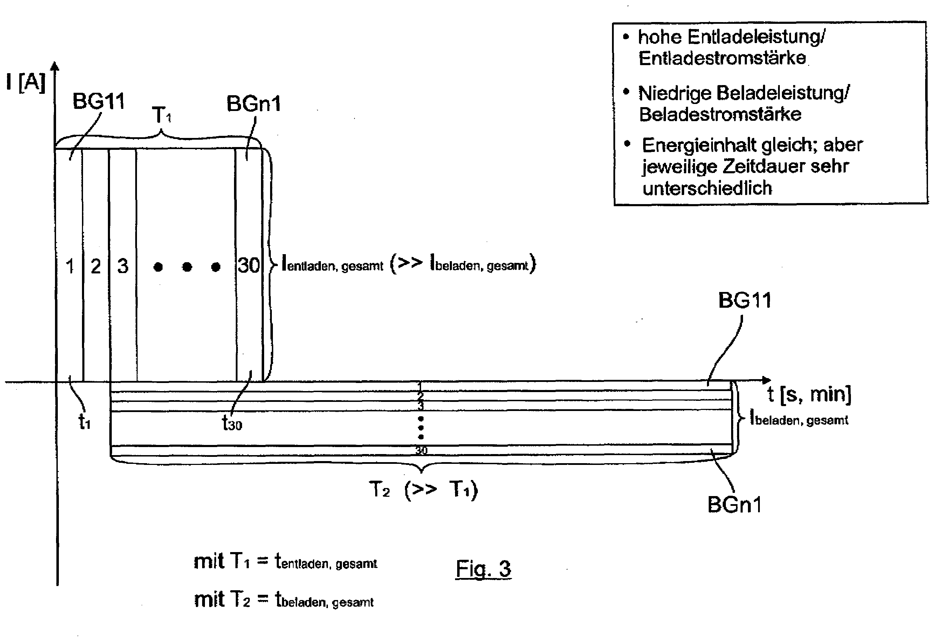

Wie in der Fig. 2 gezeigt, kann der Batteriegruppen-Ladevorgang zeitversetzt zum Batteriegruppen-Entladevorgang und damit zeitversetzt zum Traktionsbatterie-Ladevorgang stattfinden, wobei sich der Ladezeitraum T2 in der Fig. 2 lediglich rein beispielhaft unmittelbar an den Entladezeitraum T1 anschließt. Alternativ dazu kann aber auch vorgesehen sein, dass sich der Ladezeitraum T2 und der Entladezeitraum T1 überlappen, wie dies in der Fig.3 lediglich beispielhaft dargestellt ist. Weiter alternativ kann selbstverständlich zwischen diesen beiden Vorgängen bzw. Zeiträumen eine Pausenzeit vorgesehen sein, was aber hier nicht mehr im Detail dargestellt ist.

Die Starterbatterien B1 bis Bx der einzelnen Batteriegruppen sind hier bevorzugt durch Blei-Akkumulator-Starterbatterien und/oder durch Kraftfahrzeug-Starterbatterien gebildet. Und diese sind wiederum wenigstens zum Teil durch Kraftfahrzeug-Altbatterien entsprechend der vorhergegebenen Definition gebildet.

Wie in der Fig. 1 in Verbindung mit der Ladesäule 7 lediglich schematisch angedeutet, kann die Batteriespeicheranlage 8 und damit die Ladestation 10 bilanziell, vorzugsweise gesteuert mit der Steuereinrichtung 3, mit unterschiedlichen Stromsorten beladen sein und können dann von einem Benutzer zum Beispiel an der Ladesäule 7 unterschiedliche Stromsorten gewählt werden. Wird vom Benutzer zum Beispiel über eine ladesäulenseitige Anzeigeeinrichtung 7a bis 7d, die jeweils einer bestimmten Stromsorte zugeordnet sind, die Abgabe einer bestimmten Stromsorte gewünscht, was zum Beispiel durch Bedienung bzw. Betätigung einer der jeweiligen Anzeigeeinrichtung 7a bis 7d zugeordneten Betätigungstaste bzw. Bedienfeldes erfolgen kann, dann erhält die Steuereinrichtung 3 beispielsweise über eine Steuerleitung 13 ein entsprechendes Signal und wird die gewünschte Strommenge der gewünschten Stromsorte geliefert, wobei hier jedoch zu berücksichtigen ist, dass eine bestimmten Stromsorte nur so lange abzapfbar ist, wie die angeforderte Strommenge dieser Stromsorte kleiner ist als die noch in der Batteriespeicheranlage 8 für diese Stromsorte bilanziell eingespeicherte Strommenge. Hierfür wird bevorzugt nach jedem Einspeichern und Abzapfen einer bestimmten Menge einer bestimmten Stromsorte die jeweils aktuell vorhandene Strommenge dieser Stromsorte, vorzugsweise mittels einer Auswerteeinrichtung einer Steuereinrichtung, bestimmt und als neuer Strommengen-Istwert für diese bestimmte Stromsorte festgesetzt. Insgesamt gesehen ist daher maximal diejenige Strommenge abgebbar, die bilanziell für diese Stromsorte in der zugeordneten wenigstens einen Batteriespeicheranlage eingespeichert ist.

Über ein Display der Anzeigeeinrichtung 7a bis 7d kann beispielsweise auch wenigstens eine weitere Information ausgegeben oder angezeigt werden, zum Beispiel eine Information über eine ladesäulenseitig verfügbare Strommenge insgesamt und/oder eine Information über eine ladesäulenseitig verfügbare Strommenge einer bestimmten Stromsorte und/oder eine Information über den Strompreis einer bestimmten Stromsorte, um nur einige Beispiele zu nennen.

Alternativ oder zusätzlich zu einer derartigen Anzeigeeinrichtung mit beispielsweise einem Display, kann die jeweilige Information aber auch über eine drahtlose Kommunikation, zum Beispiel mit einem mobilen Endgerät, wie beispielsweise einem Smartphone, bzw. in Verbindung mit einer auf einem derartigen mobilen Endgerät installierten Applikationssoftware per Fernabfrage durchgeführt werden. Über eine derartige Fernabfrage kann zum Beispiel auch eine Strommengenreservierung an einer bestimmten Ladestation 10 für eine bestimmte Zeitdauer und/oder für eine bestimmte Strommenge, gegebenenfalls auch für eine bestimmte Strommenge pro Stromsorte, durchgeführt werden. Insbesondere in Verbindung mit einer derartigen Fernabfrage ist es von Vorteil, wenn eine Vielzahl von Ladestationen 10 Bestandteil eines Netzwerks sind und mittels der Fernabfrage die jeweils abrufbare(n) Information(en) der einzelnen Ladestationen des Netzwerks abgerufen werden können.

Die Beladung einer Ladestation 10 bzw. der Ladestationen 10 eines Ladestation-Netzwerkes, insbesondere bezogen auf unterschiedliche Stromsorten aus dem Stromnetz und/oder bezogen auf einen beliebigen Strommix aus dem Stromnetz 2, erfolgt bevorzugt zu in Abhängigkeit von zu definierten Parametern vorgegebenen und/oder ermittelten Zeitpunkten, wobei diese Zeitpunkte insbesondere mittels einer Steuereinrichtung, zum Beispiel der Steuereinrichtung 3, vorzugsweise jedoch einer zentralen, hier nicht dargestellten Beladungs-Steuereinrichtung vorgegeben bzw. ermittelt werden. Beispielsweise kann dies in Abhängigkeit von Strombeladungsparametern der Ladestation(en) 10 und/oder von Stromeinkaufsparametern, wie beispielsweise Niedrigpreiszeiten an der Strombörse, erfolgen.

Die Beladung der einzelnen Ladestationen eines Netzwerks mittels einer zum Beispiel zentralen, die Beladung steuernden Beladungs-Steuereinrichtung erfolgt hierbei zum Beispiel so, dass der Strom in einer Grundeinstellung im Wesentlichen gleich auf die einzelnen Ladestationen des Netzwerks verteilt wird, so dass die einzelnen Ladestationen 10 eines Netzwerks, insbesondere auch bezogen auf eine bestimmte Stromsorte, in etwa einen gleichen Beladungs- bzw. Füllstand aufweisen.

Die Beladung der einzelnen Ladestationen eines Netzwerks mittels der Beladungs-Steuereinrichtung kann aber auch zu bestimmten Zeitpunkten so erfolgen, dass der Strom in Abhängigkeit von einer angefragten zukünftigen Abgabemenge und einer diesbezüglich von der Beladungs-Steuereinrichtung festgestellten drohenden Unterversorgung einer bestimmten Ladestation, vorrangig dieser Ladestation zugeführt wird.

## Patentansprüche

1. Verfahren zum Beladen einer zyklisch wiederaufladbaren Traktionsbatterie von zumindest teilweise elektrisch angetriebenen Fahrzeugen,
wobei eine Ladestation (10) wenigstens eine Batteriespeicheranlage (8) und wenigstens eine Ladeeinrichtung (7) aufweist, wobei die wenigstens eine Ladeeinrichtung (7) wenigstens eine Energieübertragungseinrichtung (11) aufweist, mittels der in einem Traktionsbatterie-Ladebetrieb elektrische Energie auf eine zu ladende Traktionsbatterie (5) eines zumindest teilweise mittels der zu ladenden Traktionsbatterie elektrisch angetriebenen Fahrzeugs (4) übertragen wird,
**dadurch gekennzeichnet,**
**dass** die wenigstens eine Batteriespeicheranlage (8) eine Vielzahl von zyklisch wiederaufladbaren Batterien (B1 bis Bx) aufweist, die in mehreren Batteriegruppen (BG11 bis BGn4) zusammengefasst sind, wobei als Batterien (B1 bis Bx) Starterbatterien mit einer asymmetrischen Entlade- und Beladecharakteristik verwendet werden,
**dass** die Batteriegruppen (BG11 bis BGn4) unmittelbar zeitlich nacheinander während jeweils kurzer Batteriegruppen-Entladezeitabschnitte (t1 bis t30) von 10 bis 30 Sekunden eine mit der Ladeeinrichtung oder eine mit einer Ladeeinrichtung (7) energieübertragend verbundene Traktionsbatterie (5) eines zumindest teilweise elektrisch angetriebenen Fahrzeugs (4) mit einem hohen Batteriegruppen-Entladestrom von 300 bis 800 A speisen, wobei unmittelbar aufeinanderfolgende kurze Batteriegruppen-Entladezeitabschnitte (t1 bis t30) den hohen Batteriegruppen-Entladestrom und damit einen hohen Ladestrom (I) für die zu ladende Traktionsbatterie (5) über einen, gegenüber einer Entladung einer einzelnen Batteriegruppe, längeren Ladezeitraum (T1) ergeben.

2. Verfahren nach Anspruch 1, **dadurch gekennzeichnet, dass** zwei oder mehrere Batteriegruppen (BG11 bis BG13) während eines Traktionsbatterie-Ladebetriebs und damit während eines Batteriegruppen-Entladezeitabschnitts (t1 bis t30) parallel geschaltet werden und somit einen Parallelverbund (PV1) bilden, und dass mehrere Parallelverbünde (PV1 bis PVn) zeitlich nacheinander während der kurzen Batteriegruppen-Entladezeitabschnitte (t1 bis t30) den Ladestrom (I) an die zu ladende Traktionsbatterie abgeben.

3. Verfahren nach Anspruch 1 oder 2, **dadurch gekennzeichnet, dass** zur Bildung von Batteriegruppen (BG11 bis BGn4) zunächst eine Klassifizierung der vorhandenen Batterien (B1 bis Bx) mittels einer Messung ihrer elektrischen Eigenschaften erfolgt, und dass jeweils Batterien (B1 bis Bx) mit gleichartiger Klassifizierung in einer oder mehreren gleichartigen Batteriegruppen (BG11 bis BG13) zusammengefasst werden, wobei bevorzugt vorgesehen ist, dass zur Klassifizierung die Speicherkapazität der einzelnen Batterien (B1 bis Bx) gemessen wird und Batterien mit einer im Wesentlichen gleichen Speicherkapazität in Batteriegruppen (BG11 bis BG13; BG21, BG22; BGn1 bis BGn4) zusammengefasst werden.

4. Verfahren nach einem der vorhergehenden Ansprüche, **dadurch gekennzeichnet, dass** die Batterien (B1 bis Bx) jeder Batteriegruppe (BG11 bis BGn4) in regelmäßigen Zeitabständen auf Funktionsfähigkeit geprüft werden, und dass dabei eine defekt festgestellte Batterie (B1 bis Bx) von der Batteriegruppe (BG11 bis BGn4) abgeschaltet und durch eine Anschaltung einer in der betroffenen Batteriegruppe (BG11 bis BGn4) vorhandenen Reservebatterie ersetzt wird.

5. Verfahren nach einem der vorhergehenden Ansprüche, **dadurch gekennzeichnet, dass** der Batteriegruppen-Ladevorgang über eine Stromquelle, vorzugsweise ein Stromnetz (2), zeitlich unabhängig vom Batteriegruppen-Entladevorgang und damit vom Traktionsbatterie-Ladevorgang getätigt wird, insbesondere der Batteriegruppen-Ladevorgang über eine Stromquelle, vorzugsweise ein Stromnetz (2), zeitlich versetzt oder zeitlich überlappend zum Batteriegruppen-Entladevorgang und damit zum Traktionsbatterie-Ladevorgang getätigt wird.

6. Verfahren nach einem der vorhergehenden Ansprüche, **dadurch gekennzeichnet, dass** mehrere Batteriegruppen (BG11 bis BGn) während eines Batteriegruppen-Ladevorgangs parallel geschaltet werden, wobei die Batterien der Batteriegruppen mit einem gegenüber dem hohen Entladestrom niedrigeren, insbesondere um den Faktor 2 bis 10 niedrigeren, Ladestrom geladen werden.

7. Verfahren nach einem der vorhergehenden Ansprüche, **dadurch gekennzeichnet, dass** die wenigstens eine Batteriespeicheranlage (8) und damit die Ladestation (10) bilanziell, vorzugsweise gesteuert mit einer Steuereinrichtung, mit unterschiedlichen Stromsorten beladen ist und/oder wird, so dass eine bestimmte Strommenge des in der Ladestation (10) eingespeicherten Stroms einer bestimmten Stromsorte entspricht und/oder zugeordnet wird.

8. Verfahren nach Anspruch 7, **dadurch gekennzeichnet, dass** über die Ladestation (10), vorzugsweise gesteuert mit einer Steuereinrichtung, eine bestimmten Stromsorte nur so lange abzapfbar ist, wie die angeforderte Strommenge dieser Stromsorte kleiner ist als die noch in der Batteriespeicheranlage (8) für diese Stromsorte eingespeicherte Strommenge, insbesondere nach jedem Einspeichern und Abzapfen einer bestimmten Menge einer bestimmten Stromsorte die jeweils aktuell vorhandene Strommenge dieser Stromsorte, vorzugsweise mittels einer Auswerteeinrichtung einer Steuereinrichtung, bestimmt und als neuer Strommengen-Istwert für diese bestimmte Stromsorte festgesetzt wird und/oder insbesondere maximal diejenige Strommenge abgebbar ist, die bilanziell für diese Stromsorte in der zugeordneten wenigstens einen Batteriespeicheranlage (8) eingespeichert ist.

9. Verfahren nach Anspruch 7 oder 8, **dadurch gekennzeichnet, dass** eine Mehrzahl von Ladestationen (10) Bestandteil eines Ladestation-Netzwerkes ist, wobei eine, vorzugsweise bilanzielle, Verschiebung einer bestimmten Strommenge einer bestimmten Stromsorte zwischen unterschiedlichen Ladestationen (10), vorzugsweise gesteuert mit einer Steuereinrichtung, durchführbar ist, vorzugsweise dergestalt durchführbar ist, dass eine bestimmte Strommenge einer ersten Stromsorte einer ersten Ladestation (10) zu einer anderen, zweiten Ladestation (10) des Ladestation-Netzwerkes verschoben und dort die Strommenge der ersten Stromsorte entsprechend erhöht wird, wobei im Gegenzug von der zweiten Ladestation (10) eine der verschobenen Strommenge entsprechende Strommenge einer nicht der ersten Stromsorte entsprechenden anderen, zweiten Stromsorte der ersten Ladestation (10) zugeführt wird und somit in der ersten Ladestation (10) die Strommenge dieser zweiten Stromsorte entsprechend erhöht wird.

10. Verfahren nach einem der Ansprüche 7 bis 9, **dadurch gekennzeichnet, dass** eine Ladeeinrichtung (7), vorzugsweise eine Ladesäule als Ladeeinrichtung, in der Art einer konventionellen Kraftstoff-Zapfsäule mehrere Energieübertragungseinrichtungen (11) und/oder mehrere Anzeigeeinrichtungen (7a, 7b, 7c, 7d) aufweist, die unterschiedlichen Stromsorten zugeordnet sind.

11. Verfahren nach einem der Ansprüche 7 bis 10, **dadurch gekennzeichnet, dass** die Ladestation (10) mehrere, unterschiedlichen Stromsorten zugeordnete Ladeeinrichtungen (7), insbesondere mehrere, unterschiedlichen Stromsorten zugeordnete Ladesäulen als Ladeeinrichtungen, aufweist.

12. Verfahren nach einem der vorhergehenden Ansprüche, **dadurch gekennzeichnet, dass** die Ladestation (10), vorzugsweise die wenigstens eine Ladeeinrichtung (7) der Ladestation (10), wenigstens eine Informationseinrichtung (7a, 7b, 7c, 7d) aufweist, mittels der eine bestimmte Information ausgebbar und/oder anzeigbar ist, vorzugsweise eine Information über eine ladeeinrichtungsseitig verfügbare Strommenge und/oder über eine ladeeinrichtungsseitig verfügbare Stromsorte, insbesondere eine Information über eine ladeeinrichtungsseitig verfügbare Strommenge einer bestimmten Stromsorte, und/oder eine Information über den Strompreis, vorzugsweise über den Preis einer bestimmten Stromsorte, ausgebbar und/oder anzeigbar ist.

13. Verfahren nach Anspruch 12, **dadurch gekennzeichnet, dass** die Informationseinrichtung eine, vorzugsweise ladeeinrichtungsseitig angeordnete, Anzeigeeinrichtung (7a, 7b, 7c, 7d), vorzugsweise ein Display, aufweist, mittels der die jeweilige Information anzeigbar, insbesondere visuell anzeigbar, ist, und/oder dass die Informationseinrichtung eine Kommunikationseinrichtung ist oder aufweist, mittels der über drahtlose Kommunikation, vorzugsweise mit einem mobilen Endgerät und/oder in Verbindung mit einer auf einem mobilen Endgerät installierten Applikationssoftware, eine Fernabfrage der jeweiligen Information durchführbar ist.

14. Verfahren nach Anspruch 13, **dadurch gekennzeichnet, dass** im Falle einer Fernabfrage, insbesondere über eine Applikationssoftware eines mobilen Endgerätes, an einer Ladeeinrichtung eine Strommengenreservierung für eine bestimmte Zeitdauer und/oder für eine bestimmte Strommenge durchführbar ist.

15. Verfahren nach einem der vorhergehenden Ansprüche, **dadurch gekennzeichnet, dass** eine Mehrzahl von Ladestationen (10) Bestandteil eines Ladestation-Netzwerkes ist und mittels einer bzw. der Fernabfrage die jeweils abrufbare(n) Information(en) der einzelnen Ladeeinrichtungen (7) des Ladestation-Netzwerks abrufbar sind.

16. Verfahren nach einem der vorhergehenden Ansprüche, **dadurch gekennzeichnet, dass** die Beladung der wenigstens einen Batteriespeicheranlage (8) einer Ladestation (10), insbesondere bezogen auf unterschiedliche Stromsorten aus dem Stromnetz und/oder bezogen auf einen beliebigen Strommix aus dem Stromnetz, zu in Abhängigkeit von definierten Parametern, vorzugsweise Strombeladungsparametern der wenigstens einen Batteriespeicheranlage (8) und/oder Stromeinkaufsparametern, vorgegebenen und/oder ermittelten Zeitpunkten, insbesondere mittels einer zentralen, die Beladung steuernden Beladungs-Steuereinrichtung vorgegebenen und/oder ermittelten Zeitpunkten, erfolgt.

17. Verfahren nach einem der vorhergehenden Ansprüche, **dadurch gekennzeichnet, dass** die Beladung der Ladestationen (10) eines mehrere Ladestationen (10) aufweisenden Ladestation-Netzwerkes, vorzugsweise mittels einer zentralen, die Beladung steuernden Beladungs-Steuereinrichtung, so erfolgt, dass der Strom oder wenigstens eine bestimmte Stromsorte in einer definierten Weise auf die einzelnen Ladestationen (10) verteilt wird und/oder dass der Strom so auf die einzelnen Ladestationen (10) verteilt wird, dass diese jeweils einen bestimmten Beladungs- bzw. Füllstand aufweisen.

18. Verfahren nach einem der vorhergehenden Ansprüche, **dadurch gekennzeichnet, dass** die Beladung der Ladestationen (10) eines mehrere Ladestationen (10) aufweisenden Ladestation-Netzwerkes, vorzugsweise mittels einer zentralen, die Beladung steuernden Beladungs-Steuereinrichtung, so erfolgt, dass der Strom oder eine bestimmte Stromsorte, in Abhängigkeit von einer angefragten zukünftigen Abgabemenge und einer diesbezüglich von der Beladungs-Steuereinrichtung festgestellten drohenden Unterversorgung einer bestimmten Ladestation (10), vorrangig dieser Ladestation (10) zugeführt wird.

19. Verfahren nach einem der vorhergehenden Ansprüche, **dadurch gekennzeichnet, dass** als Starterbatterien (B1 bis Bx) Altbatterien verwendet werden.

20. Ladestation zum Beladen einer zyklisch wiederaufladbaren Traktionsbatterie von zumindest teilweise elektrisch angetriebenen Fahrzeugen, bei der wenigstens eine Batteriespeicheranlage (8) vorgesehen ist, wobei wenigstens eine Ladeeinrichtung (7) vorgesehen ist, die wenigstens eine Energieübertragungseinrichtung (11) aufweist, mittels der in einem Traktionsbatterie-Ladebetrieb elektrische Energie auf eine zu ladende Traktionsbatterie (5) eines zumindest teilweise mittels der zu ladenden Traktionsbatterie (5) elektrisch angetriebenen Fahrzeugs (5) übertragbar ist,
**dadurch gekennzeichnet,**
**dass** die Batteriespeicheranlage (8) eine Vielzahl von zyklisch wiederaufladbaren Batterien (B1 bis Bx) aufweist, die in mehreren Batteriegruppen (BG11 bis BGn4) zusammengefasst sind, wobei die Batterien (B1 bis Bx) durch Starterbatterien mit einer asymmetrischen Entlade- und Beladecharakteristik gebildet sind, und
**dass** eine Schalteinrichtung (1) zur Durchführung einer Verschaltung von einzelnen oder mehreren Batteriegruppen (BG11 bis BGn4) zur Energieübertragung an eine zu ladende Traktionsbatterie (5) vorgesehen ist, dergestalt, dass die Batteriegruppen (BG11 bis BGn4) unmittelbar zeitlich nacheinander während jeweils kurzer Batteriegruppen-Entladezeitabschnitte (t1 bis t30) von 10 bis 30 Sekunden eine mit der Ladeeinrichtung (7) energieübertragend verbundene Traktionsbatterie (5) eines zumindest teilweise elektrisch angetriebenen Fahrzeugs mit einem hohen Batteriegruppen-Entladestrom von 300 bis 800 A speisen, wobei unmittelbar aufeinanderfolgende kurze Batteriegruppen-Entladezeitabschnitte (t1 bis t30) den hohen Batteriegruppen-Entladestrom und damit einen hohen Ladestrom (I) für die zu ladende Traktionsbatterie (5) über einen, gegenüber einer Entladung einer einzelnen Batteriegruppe, längeren Ladezeitraum (T1) ergeben.

21. Ladestation nach Anspruch 20, **dadurch gekennzeichnet, dass** die Batterien (B1 bis Bx) einer Batteriegruppe (BG11 bis BGn4) jeweils in etwa eine gleich große Ladekapazität haben, dass mehrere Klassen von Batteriegruppen (BG11 bis BGn4) mit unterschiedlichen Leistungsparametern vorhanden sind, und dass die Schalteinrichtung (1) bei Bedarf eine Umschaltung von einer Batteriegruppe einer bestimmten Leistungsklasse auf eine andere Batteriegruppe der gleichen Leistungsklasse ausführt.

22. Ladestation nach Anspruch 20 oder 21, **dadurch gekennzeichnet, dass** in den Batteriegruppen (BG11 bis BGn4) jeweils zumindest eine Reservebatterie vorgesehen ist.

23. Ladestation nach einem der Ansprüche 20 bis 22, **dadurch gekennzeichnet, dass** die Starterbatterien (B1 bis Bx) Altbatterien sind.

24. Ladestation nach einem der Ansprüche 20 bis 23, **dadurch gekennzeichnet, dass** die Batteriespeicheranlage (8) in einem Container (9) angeordnet ist und dass wenigstens eine Ladeeinrichtung (7), vorzugsweise in Form einer Ladesäule, außerhalb des Containers (9) an diesem und/oder frei zugänglich angeordnet und mit der Batteriespeicheranlage (8) stromleitend verbunden ist.

## Claims

1. Method for charging a cyclically rechargeable traction battery of at least partially electrically driven vehicles,
wherein a charging station (10) has at least one battery storage installation (8) and at least one charging device (7), wherein the at least one charging device (7) has at least one energy transmission device (11) which is used to transmit electrical energy, in a traction battery charging mode, to a traction battery (5) to be charged of a vehicle (4) which is at least partially electrically driven by means of the traction battery to be charged,
**characterized**
**in that** the at least one battery storage installation (8) has a multiplicity of cyclically rechargeable batteries (B1 to Bx) which are combined in a plurality of battery groups (BG11 to BGn4), wherein starter batteries having an asymmetrical discharging and charging characteristic are used as batteries (B1 to Bx),
**in that** the battery groups (BG11 to BGn4), during in each case short battery group discharging periods (t1 to t30) of 10 to 30 seconds, supply a high battery group discharging current of 300 to 800 A in immediate temporal succession to a traction battery (5) of an at least partially electrically driven vehicle (4), which traction battery is connected to the charging device or is connected in an energy-transmitting manner to a charging device (7), wherein immediately successive short battery group discharging periods (t1 to t30) produce the high battery group discharging current and therefore a high charging current (I) for the traction battery (5) to be charged over a charging period (T1) which is longer than a discharging operation of an individual battery group.

2. Method according to Claim 1, **characterized in that** two or more battery groups (BG11 to BG13) are connected in parallel during a traction battery charging mode and therefore during a battery group discharging period (t1 to t30) and therefore form a parallel connected system (PV1), and **in that** a plurality of parallel connected systems (PV1 to PVn) output the charging current (I) to the traction battery to be charged in temporal succession during the short battery group discharging periods (t1 to t30).

3. Method according to Claim 1 or 2, **characterized in that**, in order to form battery groups (BG11 to BGn4), the existing batteries (B1 to Bx) are first of all classified by measuring their electrical properties, and **in that** batteries (B1 to Bx) with an identical classification are each combined in one or more identical battery groups (BG11 to BG13), wherein provision is preferably made for the storage capacity of the individual batteries (B1 to Bx) to be measured for the purpose of classification and for batteries with a substantially identical storage capacity to be combined in battery groups (BG11 to BG13; BG21, BG22; BGn1 to BGn4).

4. Method according to one of the preceding claims, **characterized in that** the batteries (B1 to Bx) in each battery group (BG11 to BGn4) are checked for functionality at regular intervals of time, and **in that** a battery (B1 to Bx) which is identified as defective in this case is disconnected from the battery group (BG11 to BGn4) and is replaced with a connection of a reserve battery present in the affected battery group (BG11 to BGn4).

5. Method according to one of the preceding claims, **characterized in that** the battery group charging operation is effected via a power source, preferably a power supply system (2), independently of the battery group discharging operation in terms of time and therefore independently of the traction battery charging operation, in particular the battery group charging operation is effected via a power source, preferably a power supply system (2), in a temporally staggered or temporally overlapping manner with respect to the battery group discharging operation and therefore the traction battery charging operation.

6. Method according to one of the preceding claims, **characterized in that** a plurality of battery groups (BG11 to BGn) are connected in parallel during a battery group charging operation, wherein the batteries in the battery groups are charged with a charging current which is lower than the high discharging current, in particular lower by a factor of 2 to 10.

7. Method according to one of the preceding claims, **characterized in that** the at least one battery storage installation (8), and therefore the charging station (10), has been and/or is charged in a balance-related manner with different types of power, preferably under the control of a control device, with the result that a particular amount of the power stored in the charging station (10) corresponds and/or is assigned to a particular type of power.

8. Method according to Claim 7, **characterized in that** a particular type of power can be tapped off via the charging station (10), preferably under the control of a control device, only as long as the required amount of this type of power is less than the amount of power still stored in the battery storage installation (8) for this type of power, in particular the in each case currently available amount of this type of power is determined after each process of storing and tapping off a particular amount of a particular type of power, preferably by means of an evaluation device of a control device, and is set as a new power amount actual value for this particular type of power, and/or that amount of power which is stored in a balance-related manner for this type of power in the assigned at least one battery storage installation (8) can be output at most, in particular.

9. Method according to Claim 7 or 8, **characterized in that** a plurality of charging stations (10) are part of a charging station network, wherein a shift, preferably a balance-related shift, of a particular amount of a particular type of power between different charging stations (10), preferably under the control of a control device, can be carried out, preferably in such a manner that a particular amount of a first type of power from a first charging station (10) is shifted to another, second charging station (10) of the charging station network and the amount of the first type of power is accordingly increased there, wherein, in contrast, an amount, corresponding to the shifted amount of power, of another, second type of power which does not correspond to the first type of power is supplied from the second charging station (10) to the first charging station (10) and the amount of this second type of power is therefore accordingly increased in the first charging station (10).

10. Method according to one of Claims 7 to 9, **characterized in that** a charging device (7), preferably a charging post as a charging device, in the form of a conventional fuel pump has a plurality of energy transmission devices (11) and/or a plurality of display devices (&a, 7b, 7c, 7d) which are assigned to different types of power.

11. Method according to one of Claims 7 to 10, **characterized in that** the charging station (10) has a plurality of charging devices (7) assigned to different types of power, in particular a plurality of charging posts as charging devices which are assigned to different types of power.

12. Method according to one of the preceding claims, **characterized in that** the charging station (10), preferably the at least one charging device (7) of the charging station (10), has at least one information device (7a, 7b, 7c, 7d) which can be used to output and/or display a certain item of information, preferably an item of information relating to an amount of power available on the charging device side and/or a type of power available on the charging device side, in particular an item of information relating to an amount of a particular type of power which is available on the charging device side, and/or an item of information relating to the price of power, preferably the price of a particular type of power.

13. Method according to Claim 12, **characterized in that** the information device has a display device (7a, 7b, 7c, 7d), preferably a display device arranged on the charging device side, preferably a display, which can be used to display, in particular visually display, the respective information, and/or **in that** the information device is or has a communication device which can be used to remotely request the respective information via wireless communication, preferably with a mobile terminal and/or in conjunction with application software installed on a mobile terminal.

14. Method according to Claim 13, **characterized in that**, in the event of a remote request, in particular via application software of a mobile terminal, an amount of power can be reserved at a charging device for a particular period and/or for a particular amount of power.

15. Method according to one of the preceding claims, **characterized in that** a plurality of charging stations (10) are part of a charging station network, and a or the remote request can be used to retrieve the respectively retrievable information from the individual charging devices (7) of the charging station network.

16. Method according to one of the preceding claims, **characterized in that** the at least one battery storage installation (8) of a charging station (10) is charged, in particular based on different types of power from the power supply system and/or based on an arbitrary power mix from the power supply system, at times which are predefined and/or determined on the basis of defined parameters, preferably power charging parameters of the at least one battery storage installation (8) and/or power purchase parameters, in particular at times which are predefined and/or determined by means of a central charging control device which controls the charging.

17. Method according to one of the preceding claims, **characterized in that** the charging stations (10) of a charging station network having a plurality of charging stations (10) are charged, preferably by means of a central charging control device which controls the charging, in such a manner that the power or at least a particular type of power is distributed in a defined manner among the individual charging stations (10) and/or the power is distributed among the individual charging stations (10) in such a manner that they each have a particular charging or fill level.

18. Method according to one of the preceding claims, **characterized in that** the charging stations (10) of a charging station network having a plurality of charging stations (10) are charged, preferably by means of a central charging control device which controls the charging, in such a manner that, on the basis of a requested future output amount and an imminent undersupply of a particular charging station (10) determined in this respect by the charging control device, the power or a particular type of power is primarily supplied to this charging station (10).

19. Method according to one of the preceding claims, **characterized in that** used batteries are used as starter batteries (B1 to Bx).

20. Charging station for charging a cyclically rechargeable traction battery of at least partially electrically driven vehicles, in which at least one battery storage installation (8) is provided, wherein at least one charging device (7) is provided and has at least one energy transmission device (11) which can be used to transmit electrical energy, in a traction battery charging mode, to a traction battery (5) to be charged of a vehicle (5) which is at least partially electrically driven by means of the traction battery (5) to be charged,
**characterized**
**in that** the battery storage installation (8) has a multiplicity of cyclically rechargeable batteries (B1 to Bx) which are combined in a plurality of battery groups (BG11 to BGn4), wherein the batteries (B1 to Bx) are formed by starter batteries having an asymmetrical discharging and charging characteristic, and
**in that** a switching device (1) for connecting individual battery groups or a plurality of battery groups (BG11 to BGn4) for the purpose of transmitting energy to a traction battery (5) to be charged is provided such that the battery groups (BG11 to BGn4), during in each case short battery group discharging periods (t1 to t30) of 10 to 30 seconds, supply a high battery group discharging current of 300 to 800 A in immediate temporal succession to a traction battery (5) of an at least partially electrically driven vehicle, which traction battery is connected in an energy-transmitting manner to the charging device (7), wherein immediately successive short battery group discharging periods (t1 to t30) produce the high battery group discharging current and therefore a high charging current (I) for the traction battery (5) to be charged over a charging period (T1) which is longer than a discharging operation of an individual battery group.

21. Charging station according to Claim 20, **characterized in that** the batteries (B1 to Bx) in a battery group (BG11 to BGn4) each have approximately the same charging capacity, **in that** a plurality of classes of battery groups (BG11 to BGn4) with different performance parameters are provided, and **in that** the switching device (1) switches over from one battery group of a particular performance class to another battery group of the same performance class if necessary.

22. Charging station according to Claim 20 or 21, **characterized in that** at least one reserve battery is respectively provided in the battery groups (BG11 to BGn4).

23. Charging station according to one of Claims 20 to 22, **characterized in that** the starter batteries (B1 to Bx) are used batteries.

24. Charging station according to one of Claims 20 to 23, **characterized in that** the battery storage installation (8) is arranged in a container (9), and **in that** at least one charging device (7), preferably in the form of a charging post, is arranged outside the container (9) at the latter and/or in a freely accessible manner and is connected to the battery storage installation (8) in a power-conducting manner.

## Revendications

1. Procédé de charge d'une batterie de traction rechargeable cycliquement de véhicules au moins partiellement à entraînement électrique,
une station de charge (10) comportant au moins un système de stockage de batterie (8) et au moins un dispositif de charge (7),
l'au moins un dispositif de charge (7) comportant au moins un dispositif de transfert d'énergie (11) au moyen duquel, dans un mode de charge de batterie de traction, l'énergie électrique est transférée à une batterie de traction (5) à charger d'un véhicule (4) qui est au moins partiellement entraîné électriquement au moyen de la batterie de traction à charger,
**caractérisé en ce que**
l'au moins un système de stockage de batteries (8) comporte un grand nombre de batteries rechargeables cycliquement (B1 à Bx) qui sont rassemblées en plusieurs groupes de batteries (BG11 à BGn4), les batteries (B1 à Bx) utilisées étant des batteries de démarrage ayant des caractéristiques de décharge et de charge asymétriques,
les groupes de batteries (BG11 à BGn4) alimentant, de manière immédiatement successive pendant de courts intervalles de temps de décharge de groupes de batteries (t1 à t30) de 10 à 30 secondes, une batterie de traction (5), reliée en transmission d'énergie au dispositif de charge ou à un dispositif de charge (7), d'un véhicule (4) au moins partiellement à entraînement électrique avec un courant de décharge de groupes de batterie de 300 à 800A, de courts intervalles de temps de décharge de groupes de batteries (t1 à t30) immédiatement successifs délivrant le courant de décharge de groupes de batteries élevé et donc un courant de charge élevé (I) pour la batterie de traction (5) à charger pendant un intervalle de charge (T1) plus long par rapport à une décharge d'un groupe de batteries individuel.

2. Procédé selon la revendication 1, **caractérisé en ce que** deux groupes de batteries (BG11 à BG13) ou plus sont montés en parallèle pendant un mode de charge de batteries de traction et donc pendant un intervalle de temps de décharge de groupes de batteries (t1 à t30) et forment ainsi un réseau parallèle (PV1), et **en ce que** plusieurs réseaux parallèles (PV1 à PVn) délivrent le courant de charge (I) à la batterie de traction à charger successivement pendant les courts intervalles de temps de décharge de groupes de batteries (t1 à t30).

3. Procédé selon la revendication 1 ou 2, **caractérisé en ce que**, pour former des groupes de batteries (BG11 à BGn4), les batteries existantes (B1 à Bx) sont d'abord classées en mesurant leurs propriétés électriques, et **en ce que** des batteries (B1 à Bx) avec la même classification sont à chaque fois rassemblées dans un ou plusieurs groupes de batteries du même type (BG11 à BG13),
dans lequel il est de préférence prévu que la capacité de stockage des batteries individuelles (B1 à Bx) soit mesurée pour la classification et des batteries ayant essentiellement la même capacité de stockage sont combinées dans des groupes de batteries (BG11 à BG13 ; BG21, BG22 ; BGn1 à BGn4).

4. Procédé selon l'une des revendications précédentes, **caractérisé en ce que** les batteries (B1 à Bx) de chaque groupe de batteries (BG11 à BGn4) sont contrôlées à des intervalles de temps réguliers en termes de capacité de fonctionnement, et **en ce qu'**une batterie défectueuse (B1 à Bx) du groupe de batteries (BG11 à BGn4) est désactivée et remplacée par un raccordement d'une batterie de réserve du groupe de batteries concerné (BG11 à BGn4).

5. Procédé selon l'une des revendications précédentes, **caractérisé en ce que** le processus de charge de groupes de batteries est effectué par une source d'alimentation, de préférence un réseau électrique (2), temporellement indépendamment du processus de décharge de groupes de batteries et donc du processus de charge de batteries de traction, en particulier le processus de charge de groupes de batteries est effectué par une source d'alimentation, de préférence un réseau électrique (2), de manière décalée dans le temps ou de manière superposée dans le temps par rapport au processus de décharge de groupes de batteries et donc au processus de charge de batteries de traction.

6. Procédé selon l'une des revendications précédentes, **caractérisé en ce que** plusieurs groupes de batteries (BG11 à BGn) sont montés en parallèle lors d'un processus de charge de groupes de batteries, les batteries des groupes de batteries étant chargées avec un courant de charge inférieur au courant de décharge élevé, en particulier d'un facteur de 2 à 10.

7. Procédé selon l'une des revendications précédentes, **caractérisé en ce que** l'au moins un système de stockage de batterie (8) et donc la station de charge (10) ont été chargés et/ou sont en cours de charge avec différents types de courant de manière comptabilisée, de préférence en étant commandés par un dispositif de commande, de sorte qu'une certaine quantité de courant stockée dans la station de charge (10) corresponde et/ou est associée à un type de courant déterminé.

8. Procédé selon la revendication 7, **caractérisé en ce qu'**un type de courant déterminé peut être prélevé par la station de charge (10), de préférence en étant commandée par un dispositif de contrôle, uniquement dans la mesure où la quantité demandée de ce type de courant est inférieure à la quantité de courant encore stockée dans le système de stockage de batterie (8) pour ce type de courant, en particulier après chaque stockage et prélèvement d'une quantité déterminée d'un type de courant la quantité actuellement disponible de ce type de courant est déterminée et définie comme nouvelle valeur réelle de quantité de courant pour ce type de courant déterminé, de préférence au moyen d'un dispositif d'évaluation d'un dispositif de commande, et/ou en particulier la quantité maximale de courant qui peut être prélevée est celle qui est stockée de manière comptabilisée pour ce type de courant dans l'au moins un système de stockage de batterie (8) associé.

9. Procédé selon la revendication 7 ou 8, **caractérisé en ce qu'**une pluralité de stations de charge (10) font partie d'un réseau de stations de charge,
un décalage, de préférence comptabilisé, d'une quantité de courant déterminée d'un type de courant déterminé peut être effectué entre différentes stations de charge (10), de préférence de manière commandée avec un dispositif de commande, de préférence de telle sorte qu'une quantité de courant déterminée d'un premier type de courant d'une première station de charge (10) soit décalée par rapport à une autre deuxième station de charge (10) du réseau de stations de charge et la quantité de courant du premier type de courant soit alors augmentée en conséquence, dans le retour de la deuxième station de charge (10) une quantité de courant, correspondant à la quantité de courant décalée, étant amenée à un autre deuxième type de courant, ne correspondant pas au premier type de courant, de la première station de charge (10), et donc la quantité de courant de ce deuxième type de courant est augmentée en correspondance dans la première station de charge (10).

10. Procédé selon l'une des revendications 7 à 9, **caractérisé en ce qu'**un dispositif de charge (7), de préférence une colonne de charge comme dispositif de charge, comporte à la manière d'un distributeur d'essence classique plusieurs dispositifs de transmission d'énergie (11) et/ou plusieurs dispositifs d'affichage (7a, 7b, 7c, 7d), qui sont associés à différents types de courant.

11. Procédé selon l'une des revendications 7 à 10, **caractérisé en ce que** la station de charge (10) comporte plusieurs dispositifs de charge (7) associés à différents types de courant, notamment plusieurs colonnes de charge associées à différents types de courant comme dispositifs de charge.

12. Procédé selon l'une des revendications précédentes, **caractérisé en ce que** la station de charge (10), de préférence l'au moins un dispositif de charge (7) de la station de charge (10), comporte au moins un dispositif d'information (7a, 7b, 7c, 7d) permettant de délivrer et/ou d'afficher une information déterminée, de préférence une information sur une quantité de courant disponible du côté du dispositif de charge et/ou sur un type de courant disponible du côté du dispositif de charge, en particulier une information sur une quantité de courant d'un type de courant déterminé disponible du côté du dispositif de charge, et/ou une information sur le prix du courant, de préférence sur le prix d'un type de courant déterminé.

13. Procédé selon la revendication 12, **caractérisé en ce que** le dispositif d'information comporte un dispositif d'affichage (7a, 7b, 7c, 7d), de préférence un afficheur, de préférence disposé du côté du dispositif de charge, permettant d'afficher l'information respective, en particulier visuellement, et/ou **en ce que** le dispositif d'information est ou comporte un dispositif de communication permettant d'effectuer une interrogation à distance de l'information respective par le biais d'une communication sans fil, de préférence avec un terminal mobile et/ou en liaison avec logiciel d'application installé sur un terminal mobile.

14. Procédé selon la revendication 13, **caractérisé en ce que** dans le cas d'une interrogation à distance, une réservation de quantité de courant peut être effectuée au niveau d'un dispositif de charge pendant une durée déterminée et/ou pour une quantité de courant déterminée, notamment par le biais d'un logiciel d'application d'un terminal mobile.

15. Procédé selon l'une des revendications précédentes, **caractérisé en ce qu'**une pluralité de stations de charge (10) fait partie d'un réseau de stations de charge et l'information interrogeable ou les informations interrogeables respectives des dispositifs de charge individuels (7) du réseau de stations de charge peuvent être interrogées au moyen d'une interrogation à distance ou de l'interrogation à distance.

16. Procédé selon l'une des revendications précédentes, **caractérisé en ce que** la charge de l'au moins un système de stockage de batterie (8) d'une station de charge (10) est effectuée, notamment relativement à différents types de courant provenant du réseau électrique et/ou relativement à un mélange de courants quelconque provenant du réseau électrique, à des instants déterminés et/ou spécifiés, en particulier des instants déterminés et/ou spécifiés au moyen d'un dispositif de commande de charge central qui commande la charge, en fonction de paramètres définis, de préférence de paramètres de charge de courant de l'au moins un système de stockage de batterie (8) et/ou de paramètres d'achat de courant.

17. Procédé selon l'une des revendications précédentes, **caractérisé en ce que** la charge des stations de charge (10) d'un réseau de stations de charge, comportant une pluralité de stations de charge (10), est effectuée de préférence au moyen d'un dispositif de commande de charge central qui commande la charge, de manière à ce que le courant ou au moins un type de courant déterminé soit distribué d'une manière définie aux stations de charge individuelles (10) et/ou **en ce que** le courant est distribué aux stations de charge individuelles (10) de manière à ce que celles-ci présentent chacune un niveau de charge ou de remplissage déterminé.

18. Procédé selon l'une des revendications précédentes, **caractérisé en ce que** la charge des stations de charge (10) d'un réseau de stations de charge, comportant une pluralité de stations de charge (10), est effectuée de préférence au moyen d'un dispositif de commande de charge central, qui commande la charge, de manière à amener le courant ou un type de courant déterminé, en fonction d'une quantité de délivrance future demandée et d'une sous-alimentation imminente établie à cet égard par le dispositif de commande de charge, d'une station de charge déterminée (10), prioritairement à cette station de charge (10).

19. Procédé selon l'une des revendications précédentes, **caractérisé en ce que** des batteries usagées sont utilisées comme batteries de démarrage (B1 à Bx).

20. Station de charge destinée à charger une batterie de traction rechargeable cycliquement de véhicules au moins partiellement à entraînement électrique, station de charge dans laquelle il est prévu au moins un système de stockage de batteries (8),
au moins un dispositif de charge (7) étant prévu qui comporte au moins un dispositif de transfert d'énergie (11) permettant de transférer, dans un mode de charge de batteries de traction, l'énergie électrique à une batterie de traction (5) d'un véhicule (5) au moins partiellement à entraînement électrique au moyen de la batterie de traction (5) à charger,
**caractérisée en ce que**
le système de stockage de batteries (8) comporte un grand nombre de batteries rechargeables cycliquement (B1 à Bx) qui sont rassemblées en plusieurs groupes de batteries (BG11 à BGn4), les batteries (B1 à Bx) étant formées par des batteries de démarrage ayant des caractéristiques de décharge et de charge asymétriques, et
un dispositif de commutation (1) étant prévu pour commuter un ou plusieurs groupes de batteries (BG11 à BGn4) pour le transfert d'énergie vers une batterie de traction (5) à charger, de sorte que les groupes de batteries (BG11 à BGn4) alimentent, de manière immédiatement successive pendant de courts intervalles de temps de décharge de groupes de batteries (t1 à t30) de 10 à 30 secondes, une batterie de traction (5), reliée en transmission d'énergie à un dispositif de charge (7), d'un véhicule au moins partiellement à entraînement électrique avec un courant de décharge de groupes de batterie de 300 à 800A, de courts intervalles de temps de décharge de groupes de batteries (t1 à t30) immédiatement successifs délivrant le courant de décharge de groupes de batteries élevé et donc un courant de charge élevé (I) pour la batterie de traction (5) à charger pendant un intervalle de charge (T1) plus long par rapport à une décharge d'un groupe de batteries individuel.

21. Station de charge selon la revendication 20, **caractérisée en ce que** les batteries (B1 à Bx) d'un groupe de batteries (BG11 à BGn4) ont chacune approximativement la même capacité de charge, **en ce que** plusieurs classes de groupes de batteries (BG11 à BGn4) ayant des paramètres de performances différents sont prévues et **en ce que** le dispositif de commutation (1) effectue une commutation d'un groupe de batteries d'une classe de puissance déterminée à un autre groupe de batteries de la même classe de puissance lorsque cela est nécessaire.

22. Station de charge selon la revendication 20 ou 21, **caractérisée en ce qu'**au moins une batterie de réserve est prévue dans chacun des groupes de batteries (BG11 à BGn4).

23. Station de charge selon l'une des revendications 20 à 22, **caractérisée en ce que** les batteries de démarrage (B1 à Bx) sont des batteries usagées.

24. Station de charge selon l'une des revendications 20 à 23, **caractérisée en ce que** le système de stockage de batteries (8) est disposé dans un conteneur (9) et **en ce qu'**au moins un dispositif de charge (7), de préférence sous la forme d'une colonne de charge, est disposé sur le conteneur (9), à l'extérieur de celui-ci et/ou de manière librement accessible et est relié électriquement au système de stockage de batteries (8).
